# EUROPÄISCHE PATENTANMELDUNG

(11) **EP 4 321 739 A1**
(43) Veröffentlichungstag der Anmeldung: **14.02.2024**
(21) Anmeldenummer: 23187972.7
(22) Anmeldetag: 27.07.2023
(51) Int. Cl.: F01N 3/00, F01N 3/02, F01N 5/00

(54) **ABGASANLAGE FÜR EINEN WASSERSTOFF-VERBRENNUNGSMOTOR**

(30) Priorität: 11.08.2022 DE 102022120292
(71) Anmelder: Purem GmbH, 66539 Neunkirchen (DE)
(72) Erfinder: Gaiser, Gerd, Reutlingen (DE)
(74) Vertreter: Ruttensperger Lachnit Trossin Gomoll

(57) **Zusammenfassung**

Eine Abgasanlage (14) für einen Wasserstoff-Verbrennungsmotor (12), insbesondere für ein Fahrzeug, umfasst eine von Motorabgas durchströmbare erste Motorabgas-Kühleinheit (30) zum Abführen von Wärme aus dem Motorabgas, im Bereich oder/und stromabwärts der ersten Motorabgas-Kühleinheit (30) eine Abscheideeinheit (34) zum Abscheiden von im Motorabgas enthaltenem Kondensat sowie im Bereich oder/und stromabwärts der Abscheideeinheit (34) eine Motorabgas-Heizeinheit (36) zum Erwärmen des Motorabgases.

## Beschreibung

Die vorliegende Erfindung betrifft eine Abgasanlage für einen Wasserstoff-Verbrennungsmotor, welcher beispielsweise in einem Fahrzeug als Antriebsaggregat genutzt werden kann.

In dem Bestreben, alternative Energiequellen insbesondere für den Antrieb von Fahrzeugen nutzen zu können, gewinnen mit Wasserstoff und Luftsauerstoff betriebene Wasserstoff-Verbrennungsmotoren zunehmend an Bedeutung. In einem derartigen Wasserstoff-Verbrennungsmotor werden der in diesen eingespeiste Wasserstoff und der in diesen eingespeiste Luftsauerstoff verbrannt. Das bei dieser Verbrennung entstehende Motorabgas enthält einen erheblichen Anteil an Wasserdampf. Auch unverbrannter Wasserstoff und Restluft bzw. Restluftsauerstoff können in dem Motorabgas enthalten sein.

Wird das einen hohen Wasserdampfanteil enthaltende Motorabgas insbesondere bei vergleichsweise niedrigen Umgebungstemperaturen zur Umgebung abgegeben, kann bei Kontakt des Motorabgases mit der kalten Umgebungsluft eine spontane Auskondensation von Wasser und damit eine Nebelbildung im Bereich eines Fahrzeugs auftreten. Eine derartige Nebelbildung kann einerseits als unangenehm und ungewünscht empfunden werden. Andererseits kann insbesondere bei vergleichsweise niedrigen Umgebungstemperaturen das auskondensierende Wasser auf dem Boden oder auf Gegenständen in der Umgebung des Fahrzeugs zu einer potentiell gefährlichen Eisbildung führen. Ferner kann im Motorabgas enthaltener Wasserdampf zu einer übermäßig starken Alterung von in einer Abgasanlage enthaltenen Katalysatoren führen.

Es ist die Aufgabe der vorliegenden Erfindung, eine Abgasanlage für einen Wasserstoff-Verbrennungsmotor vorzusehen, mit welcher eine Nebelbildung in dem zur Umgebung abgegebenen Motorabgas im Wesentlichen vermieden wird.

Erfindungsgemäß wird diese Aufgabe gelöst durch eine Abgasanlage für einen Wasserstoff-Verbrennungsmotor, insbesondere für ein Fahrzeug, umfassend:
- eine von Motorabgas durchströmbare erste Motorabgas-Kühleinheit zum Abführen von Wärme aus dem Motorabgas,
- im Bereich oder/und stromabwärts der ersten Motorabgas-Kühleinheit, eine Abscheideeinheit zum Abscheiden von im Motorabgas enthaltenem Kondensat,
- im Bereich oder/und stromabwärts der Abscheideeinheit, eine Motorabgas-Heizeinheit zum Erwärmen des Motorabgases.

Bei der erfindungsgemäß aufgebauten Abgasanlage fällt zunächst durch das Kühlen des Motorabgases und dabei das Senken der Temperatur des Motorabgases unter den Taupunkt ein Teil des in diesem transportierten Wassers bzw. Wasserdampfs aus dem Motorabgas aus und kann als Kondensat insbesondere in der Abscheideeinheit aufgefangen bzw. gesammelt werden. Bei der in der MotorabgasHeizeinheit dann erfolgenden Erwärmung des wasser- bzw.
wasserdampfentreicherten Motorabgases wird zwar keine Veränderung der Menge des im Motorabgas noch enthaltenen Wasserdampfs herbeigeführt. Aufgrund der Temperaturzunahme sinkt jedoch die relative Feuchte im Motorabgas deutlich ab. Wird das wasserdampfentreicherte Motorabgas dann mit der erhöhten Temperatur zur Umgebung abgegeben, wird eine spontane Kondensation bzw. Nebelbildung vermieden. Das Motorabgas kann, noch bevor dessen Temperatur wieder deutlich absinkt, sich in ausreichendem Ausmaß mit der Umgebungsluft vermischen, so dass durch die damit auftretende Verdünnung eine starke Nebelbildung lokal in dem Bereich, in welchem das Motorabgas aus der Abgasanlage austritt, vermieden werden kann.

Für eine effiziente Abkühlung des Motorabgases kann die erste Motorabgas-Kühleinheit einen ersten Wärmetauscher zum Übertragen von Wärme von dem Motorabgas auf ein Kühlmedium, vorzugsweise Kühlflüssigkeit oder Kühlgas, umfassen.

Gleichermaßen kann für eine effiziente Erwärmung des wasserdampfentreicherten Motorabgases die Motorabgas-Heizeinheit einen zweiten Wärmetauscher zum Übertragen von Wärme von einem Heizmedium, vorzugsweise Heizflüssigkeit oder Heizgas, auf das Motorabgas oder/und wenigstens einen elektrisch erregbaren Heizer umfassen.

Um die im Motorabgas transportierte Wärme für einen energieeffizienten Betrieb der Abgaslage nutzen zu können, wird vorgeschlagen, dass ein den ersten Wärmetauscher und den zweiten Wärmetauscher durchströmendes Wärmeträgermedium das Kühlmedium und das Heizmedium bereitstellt. Dieses Wärmeträgermedium kann somit Wärme von dem in einem weiter stromaufwärtigen Teil der Abgasanlage strömenden Motorabgas auf das in einem weiter stromabwärtigen Teil der Abgasanlage strömende Motorabgas übertragen.

Bei einer alternativen, ebenfalls die im Motorabgas transportierte Wärme nutzenden Ausgestaltungsvariante kann eine den ersten Wärmetauscher und den zweiten Wärmetauscher bereitstellende Wärmetauschereinheit vorgesehen sein, wobei die Wärmetauschereinheit einen von dem Motorabgas durchströmbaren stromaufwärtigen Wärmetauscherbereich und stromabwärts des stromaufwärtigen Wärmetauscherbereichs einen in Wärmeübertragungswechselwirkung mit dem stromaufwärtigen Wärmetauscherbereich stehenden stromabwärtigen Wärmetauscherbereich umfasst. Durch die Wärmeübertragungswechselwirkung der beiden Wärmetauscherbereiche wird ein direkter und ein flüssiges oder gasförmiges Wärmeträgermedium nicht benötigender und somit sehr effizienter Wärmeübertrag erreicht.

Um auch bei diesem im Wesentlichen direkten Wärmeübertrag das nach Abkühlung des Motorabgases auskondensierte Wasser abführen zu können, wird vorgeschlagen, dass die Abscheideeinheit stromabwärts des stromaufwärtigen Wärmetauscherbereichs und stromaufwärts des stromabwärtigen Wärmetauscherbereichs angeordnet ist.

Für eine bauliche Integration verschiedener Systembereiche der Abgasanlage und somit einen kompakten Aufbau wird weiter vorgeschlagen, dass stromabwärts des stromaufwärtigen Wärmetauscherbereichs oder/und an einem stromabwärtigen Ende des stromaufwärtigen Wärmetauscherbereichs und stromaufwärts des stromabwärtigen Wärmetauscherbereichs oder/und an einem stromaufwärtigen Ende des stromabwärtigen Wärmetauscherbereichs eine zweite Motorabgas-Kühleinheit zum Abführen von Wärme aus dem Motorabgas vorgesehen ist. Durch das Bereitstellen einer derartigen zweiten Motorabgas-Kühleinheit wird zusätzlich zu der bereits im stromaufwärtigen Wärmetauscherbereich erfolgenden Abkühlung das Motorabgas stromaufwärts des stromabwärtigen Wärmetauscherbereichs weiter gekühlt und somit das Auskondensieren von Wasser unterstützt

Dabei kann die zweite Motorabgas-Kühleinheit einen dritten Wärmetauscher zum Übertragen von Wärme von dem Motorabgas auf ein Kühlmedium, vorzugsweise Kühlflüssigkeit oder Kühlgas, umfassen.

Die Wärmetauschereinheit kann ein Wärmetauschereinheitgehäuse umfassen, wobei der stromaufwärtige Wärmetauscherbereich und der stromabwärtige Wärmetauscherbereich in dem Wärmetauschereinheitgehäuse vorgesehen sind.

Dabei kann weiter der dritte Wärmetauscher im Wesentlichen in dem Wärmetauschereinheitgehäuse oder/und das Wärmetauschereinheitgehäuse an einer Außenseite umgebend angeordnet sein.

Für einen effizienten Wärmeübertrag für in verschiedenen Teilen der Abgasanlage strömendes Motorabgas kann die Wärmetauschereinheit einen Gegenstrom-Wärmetauscher oder einen Kreuzstrom-Wärmetauscher umfassen.

Zum Einleiten von Motorabgas in die erste Motorabgas-Kühleinheit kann eine zu dieser führende Motorabgas-Abgasleitung vorgesehen sein.

Weiter kann zur Abgabe von wasser- bzw. wasserdampfentreichertem Motorabgas eine von der Motorabgas-Heizeinheit weg führende Motorabgas-Abgabeleitung vorgesehen sein.

Um den im Motorabgas enthaltenen Wasserstoffanteil zu senken, kann wenigstens eine Oxidationseinheit, vorzugsweise Oxidationskatalysator oder/und Brenner, zum Oxidieren von in dem Motorabgas enthaltenem Wasserstoff vorgesehen sein. Da insbesondere abhängig von der Betriebsart eines Wasserstoff-Verbrennungsmotors in dem Motorabgas auch größere Mengen Stickoxid enthalten sein können, wird weiter vorgeschlagen, dass die Abgasanlage wenigstens eine Katalysatoreinheit, vorzugsweise SCR-Katalysator, zum Vermindern des in den Motorabgas enthaltenen Stickoxidanteils aufweist.

Um in der Abgasanlage vorgesehene Katalysatoren mit einem einen möglichst geringen Wasserdampfanteil enthaltenden Motorabgas zu Beaufschlagen, wird vorgeschlagen, dass wenigstens eine Oxidationseinheit oder/und wenigstens eine Katalysatoreinheit in der Motorabgas-Abgabeleitung, also stromabwärts der ersten Motorabgas-Kühleinheit und der Motorabgas-Heizeinheit, angeordnet ist.

Zum Mindern des Stickoxidanteils im Motorabgas kann eine Reduktionsreaktion, beispielsweise eine selektive katalytische Reduktion (SCR), durchgeführt werden. Zur Abgabe des dafür erforderlichen Reaktionsmittels in das Motorabgas kann wenigstens eine Reaktionsmittelabgabeanordnung vorgesehen sein.

Vorzugsweise ist dabei wenigstens eine Reaktionsmittelabgabeanordnung stromaufwärts wenigstens einer Katalysatoreinheit angeordnet.

Um den Transport von im Verbrennungsbetrieb eines Wasserstoff-Verbrennungsmotors entstehende Geräuschen über das Motorabgas zur Umgebung möglichst effizient zu unterdrücken, kann in einer von der Motorabgas-Heizeinheit weg führenden Motorabgas-Abgabeleitung ein Schalldämpfer angeordnet sein.

Die Erfindung betrifft ferner ein Antriebssystem für ein Fahrzeug, umfassend einen Wasserstoff-Verbrennungsmotor und eine dem Wasserstoff-Verbrennungsmotor zugeordnete, erfindungsgemäß aufgebaute Abgasanlage.

Ferner betrifft die Erfindung ein Verfahren zum Betreiben eines einen Wasserstoff-Verbrennungsmotor umfassenden Antriebssystems für ein Fahrzeug, insbesondere mit erfindungsgemäßem Aufbau, bei welchem Verfahren von dem Wasserstoff-Verbrennungsmotor abgegebenes Motorabgas zum Auskondensieren von Wasser gekühlt wird und das nach dem Auskondensieren von Wasser wasserdampfentreicherte Motorabgas erwärmt wird.

Die vorliegende Erfindung wird nachfolgend mit Bezug auf die beiliegenden Figuren detailliert beschrieben. Es zeigt:
- Fig.1: eine Prinzipdarstellung eines einen Wasserstoff-Verbrennungsmotor und eine Abgasanlage für den Wasserstoff-Verbrennungsmotor umfassenden Antriebssystems für ein Fahrzeug;
- Fig. 2: eine der Figur 1 entsprechende Darstellung einer alternativen Ausgestaltungsart eines Antriebssystems für ein Fahrzeug;
- Fig. 3: eine weitere der Fig. 1 entsprechende Darstellung einer alternativen Ausgestaltungsart eines Antriebssystems für ein Fahrzeug;
- Fig. 4: eine weitere der Fig. 1 entsprechende Darstellung einer alternativen Ausgestaltungsart eines Antriebssystems für ein Fahrzeug;
- Fig. 5: eine weitere der Fig. 1 entsprechende Darstellung einer alternativen Ausgestaltungsart eines Antriebssystems für ein Fahrzeug;
- Fig. 6: eine weitere der Fig. 1 entsprechende Darstellung einer alternativen Ausgestaltungsart eines Antriebssystems für ein Fahrzeug;
- Fig. 7: eine weitere der Fig. 1 entsprechende Darstellung einer alternativen Ausgestaltungsart eines Antriebssystems für ein Fahrzeug.

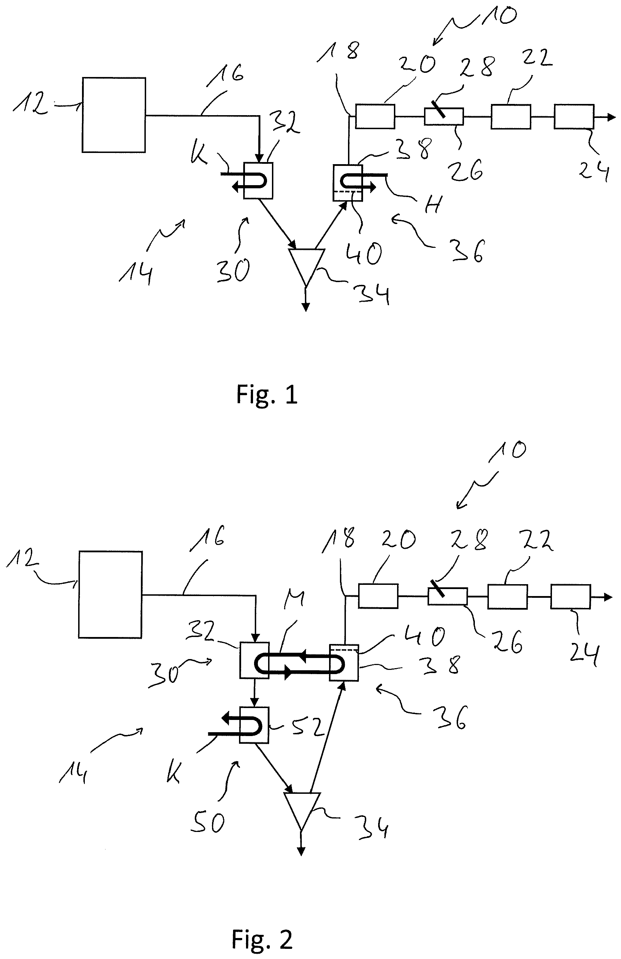

In Fig. 1 ist ein Antriebssystem für ein Fahrzeug allgemein mit 10 bezeichnet. Das Antriebssystem 10 umfasst als Antriebsaggregat einen Wasserstoff-Verbrennungsmotor 12, welchem Wasserstoff bzw. ein Wasserstoff enthaltendes Gas, und Sauerstoff bzw. ein Sauerstoff enthaltendes Gas, beispielsweise Luft, zugeführt werden. Der Wasserstoff und der Sauerstoff werden in dem Wasserstoff-Verbrennungsmotor 12 verbrannt. Das bei dieser Verbrennung entstehende Motorabgas wird über eine eine Motorabgas von dem Wasserstoff-Verbrennungsmotor 12 aufnehmende Motorabgas-Abgasleitung 16 und eine Motorabgas-Abgabeleitung 18 umfassende Abgasanlage 14 für den Wasserstoff-Verbrennungsmotor 12 zur Umgebung abgegeben.

Wird ein derartiger Wasserstoff-Verbrennungsmotor 12 in einer Betriebsart mit einem Lambdawert im Bereich von 1 betrieben, entspricht dessen Verbrennungscharakteristik näherungsweise derjenigen eines Otto-Verbrennungsmotors. Zur Abgasreinigung kann daher bei derartiger Betriebsart in der Motorabgas-Abgabeleitung 18 ein Katalysator vorgesehen sein, welcher einem in Verbindung mit einem Otto-Verbrennungsmotor eingesetzten 3-Wege-Katalysator entspricht.

Aufgrund eines höheren Wirkungsgrads wird bei Wasserstoff-Verbrennungsmotoren ein Betrieb mit einem Lambdawert größer als 1 bevorzugt, also ein Betrieb mit Sauerstoffüberschuss. Bei der Verbrennung mit Luftüberschuss enthält das Motorabgas nicht nur Spuren von nicht verbranntem Wasserstoff, sondern auch Stickoxide. Die Konzentration des im Motorabgas noch enthaltenen Wasserstoffs kann dabei derart hoch sein, dass eine Abgabe zur Umgebung hin nicht zulässig ist. In der Motorabgas-Abgabeleitung 18 kann daher eine ein Ausgestaltungsbeispiel einer Oxidationseinheit 20 bildende Katalysatoreinheit, also Oxidationskatalysator, angeordnet sein, in welcher der im Motorabgas enthaltene Restwasserstoff mit über eine Zuführleitung in die Motorabgas-Abgabeleitung 18 eingespeistem Sauerstoff oxidiert wird. Über diese Zuführleitung kann beispielsweise Luft in die Motorabgas-Abgabeleitung 18 eingeleitet werden.

Zum Senken des Stickoxidanteils im Motorabgas ist in der Motorabgas-Abgabeleitung 18 eine beispielsweise in Form eines SCR-Katalysators ausgebildete Katalysatoreinheit 22 vorgesehen. Das zur Durchführung einer derartigen Reaktion erforderliche Reaktionsmittel kann in einer stromaufwärts der Katalysatoreinheit 22 angeordneten Mischstrecke 26 vermittels einer allgemein als Injektor bezeichneten Reaktionsmittelabgabeeinheit 28 eingespritzt werden. Das im Allgemeinen als Sprühnebel in das Motorabgas eingespritzte Reaktionsmittel, beispielsweise ein Gemisch aus Harnstoff und Wasser, vermischt sich mit dem Motorabgas. Der bei dieser Durchmischung aus dem Harnstoff/Wasser-Gemisch gebildete Ammoniak führt in der in der Katalysatoreinheit 22 ablaufenden Reduktionsreaktion zu einer Denoxisierung. Um nach der Reduktionsreaktion im Motorabgas möglicherweise noch vorhandenen Ammoniak aus dem Motorabgas zu entfernen, kann stromabwärts der Katalysatoreinheit 22 ein sogenannter Clean-up-Katalysator zum reduzieren des noch vorhandenen Ammoniaks vorgesehen sein. Alternativ kann die Denoxisierung auch unter Einsatz von Wasserstoff als Reduktionsmittel durchgeführt werden.

Um die Abgabe von beim Betrieb des Wasserstoff-Verbrennungsmotors 12 entstehenden Geräuschen über die Abgasanlage 14 bzw. das diese durchströmende Motorabgas so weit als möglich zu unterdrücken, ist in der Motorabgas-Abgabeleitung 18 beispielsweise stromabwärts der Katalysatoreinheit 22 ein Schalldämpfer 24 angeordnet. Der Schalldämpfer 24 kann, so wie bei Benzin- oder Diesel-Brennkraftmaschinen zugeordneten Schalldämpfern, eine oder mehrere miteinander in Verbindung stehende und von dem Motorabgas durchströmbare Kammern oder/und eine oder mehrere Resonatorkammern umfassen kann.

Die Motorabgas-Abgasleitung 16 führt zu einer ersten Motorabgas-Kühleinheit 30. Die erste Motorabgas-Kühleinheit 30 kann einen ersten Wärmetauscher 32 umfassen, in welchem das die erste Motorabgas-Abgasleitung 16 durchströmende Motorabgas Wärme auf ein flüssiges oder gasförmiges Kühlmedium K überträgt und dadurch abgekühlt wird. Durch diese Abkühlung kondensiert ein Teil des in dem Motorabgas enthaltenen Wasser bzw. Wasserdampfs in einer auf die erste Motorabgas-Kühleinheit 30 folgenden Abscheideeinheit 34 aus und kann zur Umgebung in flüssiger Form abgegeben werden.

In einer stromabwärts auf die Abscheideeinheit 34 folgenden Motorabgas-Heizeinheit 36 wird das wasserdampfentreicherte Motorabgas wieder erwärmt. Diese Erwärmung kann dadurch erfolgen, dass auf das die Motorabgas-Heizeinheit 36 durchströmende Motorabgas durch ein Heizmedium H Wärme übertragen wird, wenn die Motorabgas-Heizeinheit 36 als zweiter Wärmetauscher 38 ausgebildet ist. Alternativ oder zusätzlich kann die Motorabgas-Heizeinheit 36 einen elektrisch erregbaren Heizer 40 umfassen, der von dem wasserdampfentreicherten Motorabgas durchströmt wird und dabei Wärme auf dieses überträgt.

In dem in Fig. 1 dargestellten Antriebssystem 10 wird dem über die Motorabgas-Abgasleitung 16 abgegebenen Motorabgas durch Abkühlung zunächst ein Teil, insbesondere ein größerer Teil, des darin enthaltenen Wasserdampfs entzogen. Das wasserdampfentreicherte Motorabgas weist aufgrund seiner vergleichsweise geringen Temperatur eine hohe relative Feuchte auf, die nahe bei 100% liegen kann. Durch die Erwärmung dieses wasserdampfentreicherten, gleichwohl jedoch eine hohe relative Feuchte aufweisenden Motorabgases in der Motorabgas-Heizeinheit 36 wird die relative Feuchte des Motorabgases gesenkt, so dass das über die Motorabgas-Abgabeleitung 18 zur Umgebung abgegebene Motorabgas eine deutlich unter 100% liegende relative Feuchte aufweist. Auch wenn dieses zur Umgebung dann abgegebene Motorabgas in Kontakt mit vergleichsweise kalter Umgebungsluft oder in der Umgebung eines Fahrzeugs sich befindenden vergleichsweise kalten Gegenständen kommt, wird eine durch Auskondensieren von Wasser entstehende spontane Nebelbildung vermieden, da, noch bevor die Temperatur des zur Umgebung abgegebenen Motorabgases unter den Taupunkt fällt, eine vergleichsweise starke Durchmischung mit Umgebungsluft und somit eine vergleichsweise starke Verdünnung des Motorabgases erfolgen wird.

Bei dem in Fig. 1 dargestellten Antriebssystem 10 erfolgt die Verringerung der im Motorabgas enthaltenen Wasserdampfmenge stromaufwärts der beispielsweise als Oxidationskatalysator ausgebildeten Oxidationseinheit 20 und der beispielsweise als SCR-Katalysator ausgebildeten Katalysatoreinheit 22. Dies bedeutet, dass diese mit einem mit deutlich geringerem Wasserdampfanteil versetzten Motorabgas beaufschlagt werden, was hinsichtlich der Alterung derartiger Katalysatoren von besonderem Vorteil ist. Weiter kann durch den Betrieb der Motorabgas-Heizeinheit 36 das in die Motorabgas-Abgabeleitung 18 eingeleitete Motorabgas wieder derart erwärmt werden, dass dessen Temperatur näherungsweise der Temperatur entspricht, mit welcher dieses von dem Wasserstoff-Verbrennungsmotor 12 ausgestoßen wird und welche auch im Bereich der Betriebstemperatur der Oxidationseinheit 20 bzw. der Katalysatoreinheit 22 liegt. Somit können die katalytischen Reaktionen zuverlässig und mit hoher Effizienz ablaufen.

Eine insbesondere im Bereich der ersten Motorabgas-Kühleinheit 30 und der Motorabgas-Heizeinheit 36 abgeänderte Ausgestaltung des Antriebssystems 10 ist in Fig. 2 veranschaulicht. Bei dieser Ausgestaltung wird in der als erster Wärmetauscher 32 ausgebildeten ersten Motorabgas-Kühleinheit 30 dem diese durchströmenden Motorabgas Wärme vermittels eines Wärmeträgermediums M entzogen, das in einem beispielsweise geschlossenen Kreislauf auch durch die als zweiter Wärmetauscher 38 ausgebildete Motorabgas-Heizeinheit 36 geleitet wird. Somit kann das weiter stromabwärts in der Abgasanlage 14 strömende Motorabgas vermittels des weiter stromaufwärts in der Abgasanlage 14 strömenden Motorabgases erwärmt werden. Alternativ oder zusätzlich kann in der Motorabgasheizeinheit 36 das diese durchströmende Motorabgas durch ein Heizmedium H oder/und einen elektrisch erregbaren Heizer 40 erwärmt werden.

Um das Motorabgas weiter kühlen zu können, ist stromabwärts der ersten Motorabgas-Kühleinheit 30 eine zweite Motorabgas-Kühleinheit 50 angeordnet. Diese kann beispielsweise einen dritten Wärmetauscher 52 umfassen, in welchem das in der ersten Motorabgas-Kühleinheit 30 bereits gekühlte Motorabgas Wärme auf das Kühlmedium K übertragen kann. So wie vorangehend bereits beschrieben, kondensiert Wasser in der Abscheideeinheit 34 aus, so dass wasserdampfentreichertes Motorabgas in Richtung zu der stromabwärts folgenden Motorabgas-Heizeinheit 36 strömt.

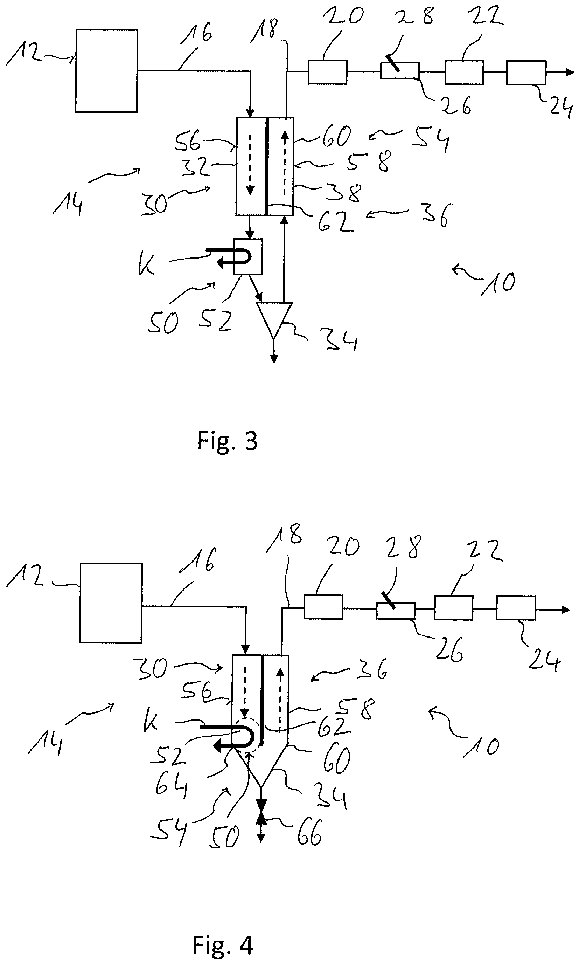

Eine vor allem hinsichtlich der effizienten Wärmeübertragung und der einfachen baulichen Ausgestaltung vorteilhafte Variante ist, bei welcher gleichermaßen die im Motorabgas enthaltene Wärme genutzt wird, um einen weiter stromabwärts strömenden Teil des Motorabgases zu erwärmen, ist in Fig. 3 dargestellt. Bei der in Fig. 3 dargestellten Ausgestaltungsform der Abgasanlage 14 ist eine allgemein mit 54 bezeichnete Wärmetauschereinheit vorgesehen, welche im dargestellten Ausgestaltungsbeispiel als Gegenstrom-Wärmetauscher ausgebildet ist. Die Wärmetauschereinheit 54 umfasst einen stromaufwärtigen Wärmetauscherbereich 56, welcher die erste Motorabgas-Kühleinheit 30 bzw. den ersten Wärmetauscher 32 bereitstellt.

Die Wärmetauschereinheit 54 umfasst ferner einen stromabwärtigen Wärmetauscherbereich 58, welcher die Motorabgas-Heizeinheit 36 bzw. den zweiten Wärmetauscher 38 bereitstellt. Die beiden Wärmetauscherbereiche 56, 58 können in einem Wärmetauschereinheitgehäuse 60 der Wärmetauschereinheit 54 kanalartig ausgebildet und durch eine oder mehrere Trennwände 62 voneinander getrennte Strömungskanäle bereitstellen, in welchen das Motorabgas im Wesentlichen in zueinander entgegengesetzten Richtungen strömt und dadurch Wärme von dem den stromaufwärtigen Wärmetauscherbereich 56 durchströmenden Teil des Motorabgases auf den den zweiten Wärmetauscherbereich 58 durchströmenden Teil des Motorabgases überträgt.

Es ist darauf hinzuweisen, dass auch bei dieser Ausgestaltung in der Motorabgas-Heizeinheit 36, also im zweiten Wärmetauscherbereich 58, das dort strömende Motorabgas zusätzlich durch ein Heizmedium oder/und einen elektrisch erregbaren Heizer erwärmt werden kann, so wie vorangehend beschreiben.

Das den stromaufwärtigen Wärmetauscherbereich 56 durchströmende und diesen verlassende Motorabgas wird zu der stromabwärts auf den stromaufwärtigen Wärmetauscherbereich 56 folgenden zweiten Motorabgas-Heizeinheit 50 bzw. zum dritten Wärmetauscher 52 geleitet, wo es Wärme an das Kühlmedium K abgibt und somit weiter gekühlt wird. In der Abscheideeinheit 34 wird das durch die weitere Abkühlung aus dem Motorabgas auskondensierende Wasser gesammelt. Das wasserdampfentreicherte Motorabgas strömt dann zum stromabwärtigen Wärmetauscherbereich 58 weiter, wo es durch die thermische Wechselwirkung mit dem im stromaufwärtigen Wärmetauscherbereich 56 strömenden Motorabgas und ggf. zusätzlich durch ein Heizmedium oder/und einen elektrisch erregbaren Heizer erwärmt wird.

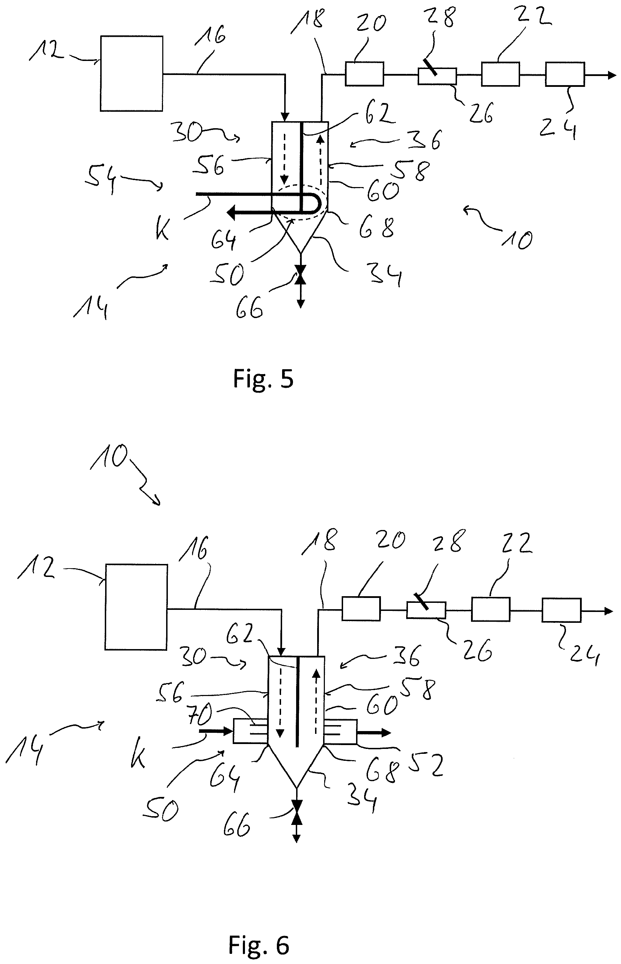

Die Fig. 4 zeigt eine Ausgestaltungsvariante, bei welcher die zweite Motorabgas-Kühleinheit 50 und die Abscheideeinheit 34 baulich mit der Wärmetauschereinheit 54 zusammengefasst sind. Wie in Fig. 5 zu erkennen, kann der dritte Wärmetauscher 52 der zweiten Motorabgas-Kühleinheit 50 in den stromaufwärtigen Wärmetauscherbereich 56, insbesondere ein stromabwärtiges Ende 64, desselben integriert sein. An bzw. nach diesem stromabwärtigen Ende 64 des stromaufwärtigen Wärmetauscherbereichs 56 erfolgt ein strömungstechnischer Übergang zum zur Abscheideeinheit 34 und von dieser zum stromabwärtigen Wärmetauscherbereich 58. An der Abscheideeinheit 34 und damit auch im Wärmetauschereinheitgehäuse 60 der Wärmetauschereinheit 54 angesammeltes Wasser kann beispielsweise über eine Absperreinheit 66 zur Umgebung abgegeben werden.

Für einen sehr effizienten Wärmeübertrag kann der dritte Wärmetauscher 52 Rippen aufweisen, welche die zur thermischen Wechselwirkung mit dem im stromaufwärtigen Wärmetauscherbereich 56 strömenden Motorabgas zur Verfügung stehende Oberfläche vergrößern.

Bei der Fig. 5 dargestellten Abwandlung des in Fig. 4 veranschaulichten Aufbauprinzips ist die zweite Motorabgas-Kühleinheit 50 sowohl in den stromaufwärtigen Wärmetauscherbereich 56, insbesondere im Bereich des stromabwärtigen Endes 64 desselben, als auch in dem stromaufwärtigen Wärmetauscherbereich 58, insbesondere ein stromaufwärtiges Ende 68 desselben, integriert. Somit kann im gesamten Übergangsbereich vom stromaufwärtigen Wärmetauscherbereich 58, also der ersten Motorabgas-Kühleinheit 30, zum stromabwärtigen Wärmetauscherbereich 58, also der Motorabgas-Heizeinheit 36, durch Kühlen des Motorabgases Wasser bzw. Wasserdampf auskondensiert und in der Abscheideeinheit 34 aufgenommen bzw. gesammelt werden.

Auch bei dieser Ausgestaltung kann für einen sehr effizienten Wärmeübertrag der dritte Wärmetauscher 52 Rippen aufweisen, welche die zur thermischen Wechselwirkung mit dem im stromaufwärtigen Wärmetauscherbereich 56 strömenden Motorabgas zur Verfügung stehende Oberfläche vergrößern. Es ist weiter darauf hinzuweisen, dass auch bei dieser Ausgestaltungsform eine zusätzliche Erwärmung des den stromabwärtigen Wärmetauscherbereich 58 durchströmenden Motorabgases durch ein Heizmedium oder/und einen elektrisch erregbaren Heizer erfolgen kann.

Auch bei der in Fig. 6 dargestellten Ausgestaltungsvariante einer Abgasanlage 14 wird an der Wärmetauschereinheit 54 Wärme im Bereich des stromabwärtigen Endes 64 des stromaufwärtigen Wärmetauscherbereichs 56 und im Bereich des stromaufwärtigen Endes 66 des stromabwärtigen Wärmetauscherbereichs 58 aus dem Motorabgas abgezogen. Zu diesem Zwecke umgibt der erste Wärmetauscher 32 der ersten Motorabgas-Kühleinheit 30 das Wärmetauschereinheitgehäuse 60 der Wärmetauschereinheit 54 an seiner Außenseite und ist von dem Kühlmedium K durchströmbar. Zur verstärkten thermischen Wechselwirkung und damit zur verbesserten Wärmeabfuhr aus dem die Wärmetauschereinheit 54 durchströmenden Motorabgas können an der Außenseite des Wärmetauschereinheitgehäuse 60 Wärmeübertragungsrippen 70 vorgesehen sein, durch welche die zur Abgabe von Wärme auf das Kühlmedium K zur Verfügung stehende Oberfläche vergrößert wird.

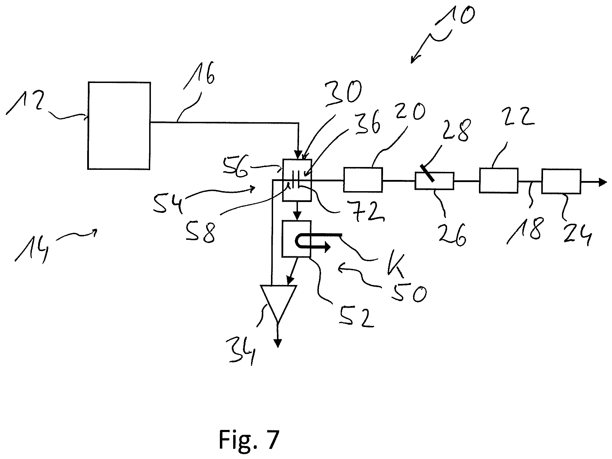

Eine weitere alternative Ausgestaltung, bei welcher in einer Wärmetauschereinheit 54 Wärme von dem in einem weiter stromaufwärtigen Teil der Abgasanlage 14 strömenden Motorabgas auf das in einem weiter stromabwärtigen Teil der Abgasanlage 14 strömende Motorabgas übertragen werden kann, ist in Fig. 7 veranschaulicht. Bei dieser Ausgestaltungsform ist die Wärmetauschereinheit 54 als Kreuzstrom-Wärmetauscher ausgebildet. Im Wärmetauschereinheitgehäuse 60 ist ein im Wesentlichen den stromaufwärtigen Wärmetauscherbereich 56 bereitstellendes Volumen gebildet, welches von dem über die erste Motorabgas-Abgasleitung 16 zugeführten Motorabgas durchströmt wird. Das durch diesen stromaufwärtigen Wärmetauscherbereich 56 geleitete Motorabgas durchströmt dann die zweite Motorabgas-Kühleinheit 50 bzw. deren dritten Wärmetauscher 52 und gibt dabei Wärme an das Kühlmedium K ab. Nach dem Durchströmen der Abscheideeinheit 34 strömt das wasserdampfentreicherte Motorabgas dann durch einen den stromabwärtigen Wärmetauscherbereich 58 bereitstellenden und im Wärmetauschereinheitgehäuse 60 verlaufenden Leitungsbereich, an welchem Wärmeübertragungsrippen 72 zur verstärkten thermischen Wechselwirkung mit dem den stromaufwärtigen Wärmetauscherbereich 56 durchströmenden Motorabgas vorgesehen sein können.

Auch bei dieser Ausgestaltungsform verlässt das Motorabgas den stromaufwärtigen Wärmetauscherbereich 58 bzw. die Wärmetauschereinheit 54 erwärmt und strömt dann beispielsweise zu der Katalysatoreinheit 44` und dem Schalldämpfer 24, bevor es erwärmt und somit mit vergleichsweise geringer relativer Feuchte zur Umgebung abgegeben wird.

Auch bei den in den Fig. 6und 7 dargestellten Ausgestaltungsformen können zur zusätzlichen Erwärmung dem stromabwärtigen Wärmetauscherbereich 58 die vorangehend beschriebenen Maßnahmen zusätzlich zugeordnet sein. Es kann also eine zusätzliche Erwärmung des den stromabwärtigen Wärmetauscherbereich 58 durchströmenden, wasserdampfentreicherten Motorabgases durch ein Heizmedium oder/und einen elektrisch erregbaren Heizer erfolgen.

Bei allen vorangehend beschriebenen Ausgestaltungsformen können, sofern eingesetzt, das Kühlmedium K oder/und das Heizmedium H durch Flüssigkeiten bzw. Gase bereitgestellt werden, wobei insbesondere das Kühlmedium K die darin aufgenommene Wärme in einem weiteren Wärmetauscher zur Umgebung abgeben kann. Das Kühlmedium K kann beispielsweise auch durch die Umgebungsluft bereitgestellt sein, so dass der erste Wärmetauscher beispielsweise eine Mehrzahl von von Umgebungsluft umströmbaren Rippen umfassen kann. Das Heizmedium H kann beispielsweise bei den in der Oxidationseinheit 20 bzw. der Katalysatoreinheit 22 ablaufenden katalytischen Prozessen erwärmt werden. Alternativ kann anstelle oder zusätzlich zu dem eine Oxidationseinheit 20 bereitstellenden Oxidationskatalysator zum Oxidieren des im Motorabgas noch enthaltenen Restwasserstoffs als ein weiteres Beispiel einer derartigen Oxidationseinheit ein Brenner vorgesehen sein, in welchem der Restwasserstoff mit Sauerstoff verbrannt wird. Der Sauerstoff kann beispielsweise durch Einspeisen von Luft in die Motorabgas-Abgabeleitung 18 stromaufwärts der Oxidationseinheit 20 bereitgestellt werden. Die bei der Verbrennung entstehende Wärme kann in einem dem Brenner zugeordneten Wärmetauscher auf das Heizmedium H und von diesem auf das den zweiten Wärmetauscher 38 durchströmende Motorabgas übertragen werden.

Bei einer erfindungsgemäß aufgebauten Abgasanlage kann, wie dies insbesondere die Ausgestaltungsformen der Fig. 3 bis 6 veranschaulichen, eine bauliche Verknüpfung bzw. Verschmelzung verschiedener Systembereiche, insbesondere der ersten Motorabgas-Kühleinheit, der Abscheideeinheit und der Motorabgas-Heizeinheit, gegebenenfalls auch mit der zweiten Motorabgas-Kühleinheit vorgesehen sein, so dass diese verschiedenen Systembereiche unmittelbar aneinander anschließen bzw. einander in strömungstechnischer Hinsicht auch überlappen. So kann vermittels der Abscheideeinheit bereits im Bereich der ersten Motorabgas-Kühleinheit oder/und auch noch im Bereich der Motorabgas-Heizeinheit Wasserdampf bzw. Wasser aus dem Motorabgas abgeschieden und zum Beispiel in flüssiger Form gesammelt werden.

## Patentansprüche

1. Abgasanlage für einen Wasserstoff-Verbrennungsmotor, insbesondere für ein Fahrzeug, umfassend:
- eine von Motorabgas durchströmbare erste Motorabgas-Kühleinheit (30) zum Abführen von Wärme aus dem Motorabgas,
- im Bereich oder/und stromabwärts der ersten Motorabgas-Kühleinheit (30), eine Abscheideeinheit (34) zum Abscheiden von im Motorabgas enthaltenem Kondensat,
- im Bereich oder/und stromabwärts der Abscheideeinheit (34), eine Motorabgas-Heizeinheit (36) zum Erwärmen des Motorabgases.

2. Abgasanlage nach Anspruch 1, **dadurch gekennzeichnet, dass** die erste Motorabgas-Kühleinheit (30) einen ersten Wärmetauscher (32) zum Übertragen von Wärme von dem Motorabgas auf ein Kühlmedium (K), vorzugsweise Kühlflüssigkeit oder Kühlgas, umfasst, oder/und dass die Motorabgas-Heizeinheit (36) einen zweiten Wärmetauscher (38) zum Übertragen von Wärme von einem Heizmedium (H), vorzugsweise Heizflüssigkeit oder Heizgas, auf das Motorabgas umfasst, oder/und dass die Motorabgas-Heizeinheit (36) wenigstens einen elektrisch erregbaren Heizer (40) umfasst.

3. Abgasanlage nach Anspruch 2, **dadurch gekennzeichnet, dass** ein den ersten Wärmetauscher (32) und den zweiten Wärmetauscher (38) durchströmendes Wärmeträgermedium (M) das Kühlmedium und das Heizmedium bereitstellt.

4. Abgasanlage nach Anspruch 2, **gekennzeichnet durch** eine den ersten Wärmetauscher (32) und den zweiten Wärmetauscher (38) bereitstellende Wärmetauschereinheit (54), wobei die Wärmetauschereinheit (54) einen von dem Motorabgas durchströmbaren stromaufwärtigen Wärmetauscherbereich (56) und stromabwärts des stromaufwärtigen Wärmetauscherbereichs (56) einen in Wärmeübertragungswechselwirkung mit dem stromaufwärtigen Wärmetauscherbereich (56) stehenden stromabwärtigen Wärmetauscherbereich (58) umfasst.

5. Abgasanlage nach Anspruch 4, **dadurch gekennzeichnet, dass** die Abscheideeinheit (34) stromabwärts des stromaufwärtigen Wärmetauscherbereichs (56) und stromaufwärts des stromabwärtigen Wärmetauscherbereichs (58) angeordnet ist.

6. Abgasanlage nach Anspruch 4 oder 5, **dadurch gekennzeichnet, dass** stromabwärts des stromaufwärtigen Wärmetauscherbereichs (56) oder/und an einem stromabwärtigen Ende (64) des stromaufwärtigen Wärmetauscherbereichs (56) und stromaufwärts des stromabwärtigen Wärmetauscherbereichs (58) oder/und an einem stromaufwärtigen Ende (68) des stromabwärtigen Wärmetauscherbereichs (58) eine zweite Motorabgas-Kühleinheit (50) zum Abführen von Wärme aus dem Motorabgas vorgesehen ist.

7. Abgasanlage nach Anspruch 6, **dadurch gekennzeichnet, dass** die zweite Motorabgas-Kühleinheit (50) einen dritten Wärmetauscher (52) zum Übertragen von Wärme von dem Motorabgas auf ein Kühlmedium (K), vorzugsweise Kühlflüssigkeit oder Kühlgas, umfasst,
vorzugsweise wobei die Wärmetauschereinheit (54) ein Wärmetauschereinheitgehäuse (60) umfasst, wobei der stromaufwärtige Wärmetauscherbereich (56) und der stromabwärtige Wärmetauscherbereich (58) in dem Wärmetauschereinheitgehäuse (60) angeordnet sind und der dritte Wärmetauscher (50) im Wesentlichen in dem Wärmetauschereinheitgehäuse (60) angeordnet ist oder/und das Wärmetauschereinheitgehäuse (60) an einer Außenseite umgebend angeordnet ist.

8. Abgasanlage nach einem der Ansprüche 4-7, **dadurch gekennzeichnet, dass** die Wärmetauschereinheit (54) einen Gegenstrom-Wärmetauscher oder einen Kreuzstrom-Wärmetauscher umfasst.

9. Abgasanlage nach einem der Ansprüche 1-8, **gekennzeichnet durch** eine zu der ersten Motorabgas-Kühleinheit (30) führende Motorabgas-Abgasleitung (16) oder/und durch eine von der Motorabgas-Heizeinheit (36) weg führende Motorabgas-Abgabeleitung (18).

10. Abgasanlage nach einem der Ansprüche 1-9, **gekennzeichnet durch** wenigstens eine Oxidationseinheit (20), vorzugsweise Oxidationskatalysator oder/und Brenner, zum Oxidieren von in dem Motorabgas enthaltenem Wasserstoff, oder/und wenigstens eine Katalysatoreinheit (22), vorzugsweise SCR-Katalysator, zum Vermindern des in den Motorabgas enthaltenen Stickoxidanteils.

11. Abgasanlage nach Anspruch 9 und Anspruch 10, **dadurch gekennzeichnet, dass** wenigstens eine Oxidationseinheit (20) oder/und wenigstens eine Katalysatoreinheit (22) in der Motorabgas-Abgabeleitung angeordnet (18) ist.

12. Abgasanlage nach einem der Ansprüche 1-11, **gekennzeichnet durch** wenigstens eine Reaktionsmittelabgabeanordnung (28) zum Abgeben von Reaktionsmittel in das Motorabgas.

13. Abgasanlage nach Anspruch 12, sofern auf Anspruch 10 oder 11 rückbezogen, **dadurch gekennzeichnet, dass** wenigstens eine Reaktionsmittelabgabeanordnung (28) stromaufwärts wenigstens einer Katalysatoreinheit (22) angeordnet ist.

14. Abgasanlage nach einem der Ansprüche 1-13, **gekennzeichnet durch** wenigstens einen in einer von der Motorabgas-Heizeinheit (36) weg führenden Motorabgas-Abgabeleitung (18) angeordneten Schalldämpfer (24).

15. Antriebssystem für ein Fahrzeug, umfassend einen Wasserstoff-Verbrennungsmotor (12) und eine dem Wasserstoff-Verbrennungsmotor (12) zugeordnete Abgasanlage (14) nach einem der Ansprüche 1-14.

16. Verfahren zum Betreiben eines einen Wasserstoff-Verbrennungsmotor (12) umfassenden Antriebssystems (10) für ein Fahrzeug, insbesondere nach Anspruch 15, bei welchem Verfahren von dem Wasserstoff-Verbrennungsmotor (12) abgegebenes Motorabgas zum Auskondensieren von Wasser gekühlt wird und das nach dem Auskondensieren von Wasser wasserdampfentreicherte Motorabgas erwärmt wird.
